# EUROPÄISCHE PATENTSCHRIFT

(11) **EP 4 719 844 B1**
(45) Veröffentlichungstag und Bekanntmachung des Hinweises auf die Patenterteilung: **18.11.2026**
(21) Anmeldenummer: 24726240.5
(22) Anmeldetag: 14.05.2024
(51) Int. Cl.: B60T 8/88, B60T 13/66, B60T 17/18

(54) **ELEKTRONISCHES BREMSSYSTEM, VERFAHREN ZUR STEUERUNG UND ANHÄNGEFAHRZEUG**
ELECTRONIC BRAKING SYSTEM, CONTROL METHOD AND TRAILER VEHICLE
SYSTÈME DE FREINAGE ÉLECTRONIQUE, PROCÉDÉ DE COMMANDE ET VÉHICULE REMORQUE

(30) Priorität: 02.06.2023 DE 102023114603
(43) Veröffentlichungstag der Anmeldung: 08.04.2026
(73) Patentinhaber: ZF CV Systems Global GmbH, 3006 Bern (CH)
(72) Erfinder: STENDER, Axel, 31787 Hameln (DE); VON DER BEEKE, Jan-Christoph, 31191 Algermissen (DE); WITTE, Norbert, 31867 Lauenau (DE)
(74) Vertreter: Ohlendorf, Henrike
(86) Internationale Anmeldenummer: PCT/EP2024/063275
(87) Internationale Veröffentlichungsnummer: WO 2024/245741

(56) Entgegenhaltungen:
- EP-A1- 3 626 562
- EP-A1- 4 186 760
- DE-A1- 102014 107 399
- US-A1- 2008 296 106

## Beschreibung

Die Erfindung betrifft ein elektronisches Bremssystem für ein Anhängefahrzeug, ein Verfahren zur Steuerung eines elektronischen Bremssystems und ein Anhängefahrzeug mit einem elektronischen Bremssystem.

Moderne Anhängefahrzeuge weisen ein elektronisches Bremssystem auf, bei dem ein elektronisches Bremssignal von einem Zugfahrzeug über eine Anhängerschnittstelle zum Anhängefahrzeug übertragen und dort von einer elektronischen Steuerung mit einem Bremsmodulator umgesetzt wird in einen Bremsdruck für Betriebsbremsen. Die Anhängerschnittstelle ist üblicherweise ausgebildet mit einer Steckverbindung gemäß ISO 7638 und beinhaltet eine Spannungsversorgung für das Anhängefahrzeug und das elektronische Bremssystem sowie einen CAN-Bus für die Übertragung von Daten.

Zukünftig zum Einsatz kommende Anhängefahrzeuge sollen autonomes Fahren und/oder die Nutzung von Fahrerassistenzsystemen ermöglichen, etwa die Verwertung von Kamerabildern oder Daten von Radar- und Lidarsensoren zur Überwachung des Umfeldes um das Anhängefahrzeug. Die Bilder von Kameras am Anhängefahrzeug müssen zum Zugfahrzeug übertragen werden. Die Daten von Sensoren am Anhängefahrzeug müssen verarbeitet und/oder zum Zugfahrzeug übertragen werden. Im Anhängefahrzeug ist deshalb insbesondere für das autonome Fahren eine weitere elektronische Steuerung vorgesehen, die über eine bereits bekannte Hochgeschwindigkeitsschnittstelle mit dem Zugfahrzeug verbunden ist. Die Spannungsversorgung der zusätzlichen elektronischen Steuerung erfolgt ebenfalls über die Hochgeschwindigkeitsschnittstelle.

Bei Ausfall der üblichen Anhängerschnittstelle oder der neuen Hochgeschwindigkeitsschnittstelle können das elektronische Bremssystem und/oder das autonome Fahren nicht mehr ausgeführt werden. Das Anhängefahrzeug muss mit dem Zugfahrzeug zum Stehen gebracht werden.

EP 3 626 562 A1 offenbart ein Bremssystem für ein Fahrzeug mit einem ersten Achsdruckmodulator für Betriebsbremskammern einer ersten Achse und einem zweiten Achsdruckmodulator für Federspeicherbremszylinder einer zweiten Achse. Das Bremssystem weist außerdem zwei elektronische Bremssteuereinheiten auf, die elektrische Steuersignale zur Ansteuerung der Achsdruckmodulatoren ausgeben. Eine elektronische Parkbremssteuervorrichtung liefert ein pneumatisches Steuersignal zur Betätigung der Federspeicherbremszylinder. Eine Druckmodulationseinheit ist dazu ausgelegt, ein von der elektronischen Parkbremssteuervorrichtung ausgegebenes pneumatisches oder elektrisches Signal in ein pneumatisches Steuersignal für den ersten Achsdruckmodulator umzuwandeln. Das System umfasst mehrere redundante Steuerkreise, wobei ein erster Steuerkreis eine primäre Betriebsbremsfunktion bereitstellt und weitere Steuerkreise bei Fehlfunktion redundante Funktionen übernehmen.

Aufgabe der vorliegenden Erfindung ist die Schaffung eines elektronischen Bremssystems für ein Anhängefahrzeug, mit der Möglichkeit zur Verbesserung der Redundanz, insbesondere zum Bremsen, zum autonomen Fahren und/oder im Hinblick auf vorhandene oder mögliche Fahrerassistenzsysteme.

Zur Lösung der Aufgabe weist das elektronische Bremssystem die Merkmale des Anspruchs 1 auf.

Erfindungsgemäß weist das elektronische Bremssystem eine erste elektronische Steuerung für die Steuerung von Betriebsbremsen und eine zweite elektronische Steuerung für die Übertragung von Daten aus dem Anhängefahrzeug zum Zugfahrzeug auf. Dabei ist die erste elektronische Steuerung mit einer ersten Anhängerschnittstelle zur Übertragung von Daten und elektrischer Spannung vom Zugfahrzeug zum Anhängefahrzeug verbunden und die zweite elektronische Steuerung ist mit einer zweiten Anhängerschnittstelle zur Übertragung von Daten und elektrischer Spannung verbunden. Die erste elektronische Steuerung ist mit der zweiten elektronischen Steuerung wenigstens über eine Datenschnittstelle oder eine elektrische Leitung zur Spannungsversorgung verbunden.

Mit den genannten Maßnahmen ist eine Verbesserung der Redundanz des Bremssystems möglich.

Optional und erfindungsgemäß ist die erste elektronische Steuerung mit der zweiten elektronischen Steuerung über die Datenschnittstelle und die elektrische Leitung zur Spannungsversorgung verbunden. Dies ermöglicht eine Redundanz hinsichtlich der übertragenen Daten und der Spannungsversorgung zugleich.

Optional und erfindungsgemäß sind wenigstens Daten oder elektrische Spannungen in einer Richtung von der ersten elektronischen Steuerung zur zweiten elektronischen Steuerung oder umgekehrt übertragbar.

Über die zweite Anhängerschnittstelle werden vorzugsweise unter anderem dieselben Daten zur Steuerung des Bremsdrucks für die Betriebsbremsen übertragen wie über die erste Anhängerschnittstelle, bevorzugt über einen CAN-Bus. Auf diese Weise ist eine redundante Übermittlung der Daten des Steuerdrucks für die Betriebsbremse vom Zugfahrzeug zum Anhängefahrzeug gegeben.

Optional und erfindungsgemäß sind Daten und elektrische Spannung bidirektional zwischen erster elektronischer Steuerung (EBS) und zweiter elektronischer Steuerung (VCU) übertragbar. Dadurch ist größtmögliche Redundanz gegeben.

Optional und erfindungsgemäß ist die zweite Anhängerschnittstelle eine 1000Base-T1-Schnittstelle. Dabei handelt es sich vorzugsweise um eine Hochgeschwindigkeits-Datenschnittstelle nach der neuen ISO 23870.

Die erste Anhängerschnittstelle beinhaltet vorzugsweise eine Steckverbindung nach ISO 7638, insbesondere in der Version aus dem Jahr 2018, mit Spannungsversorgung und Datenübertragung über einen CAN-Bus.

Gegenstand der Erfindung ist auch ein Verfahren zur Steuerung des elektronischen Bremssystems, mit den Merkmalen des Anspruchs 6. Das Verfahren weist wenigstens eines der folgenden Merkmale auf:
a) Bei Ausfall oder Störung von elektrischen Bremssignalen auf der ersten Anhängerschnittstelle verarbeitet die erste elektronische Steuerung elektronische Bremssignale, welche über die Datenschnittstelle und die zweite elektronische Steuerung zur ersten elektronischen Steuerung übermittelt werden.
b) Bei Ausfall oder Störung der elektrischen Spannung auf der ersten Anhängerschnittstelle nutzt die erste elektronische Steuerung die elektrische Spannung, welche über die Datenschnittstelle und die zweite elektronische Steuerung für die erste elektronische Steuerung zur Verfügung gestellt wird.
c) Bei Ausfall oder Störung der elektrischen Bremssignale auf der ersten Anhängerschnittstelle erhält die zweite elektronische Steuerung Daten von der ersten elektronischen Steuerung und überträgt die Daten zur zweiten Anhängerschnittstelle.
d) Bei Ausfall oder Störung der Übertragung von Daten über die zweite Anhängerschnittstelle erhält die erste elektronische Steuerung Daten von der zweiten elektronischen Steuerung und überträgt die Daten zur ersten Anhängerschnittstelle.

Ausfall oder Störung der elektrischen Bremssignale auf der ersten Anhängerschnittstelle können in Abhängigkeit vom Charakter der Bremssignale überprüft und/oder festgestellt werden. Beispielsweise kann die erste elektronische Steuerung durch entsprechende Software oder Hardware feststellen, ob von der ersten Anhängerschnittstelle kommend überhaupt Daten von Bremssignalen eingehen und/oder ob die Daten keinem vorher festgelegten Muster entsprechen. Ausfall oder Störung der elektrischen Spannung auf der ersten Anhängerschnittstelle sind beispielsweise durch Unterschreiten einer unteren Grenzspannung bestimmbar. Eine Prüfung des Ausfalls oder Störung der Übertragung von Daten über die zweite Anhängerschnittstelle kann analog zur Prüfung der Datenübertragung auf der ersten Anhängerschnittstelle erfolgen. Jedes der vier Merkmale a) bis d) stellt eine Verbesserung der Redundanz innerhalb des elektronischen Bremssystems dar.

Gegenstand der Erfindung ist auch ein Anhängefahrzeug mit dem elektronischen Bremssystem.

Weitere Merkmale der Erfindung ergeben sich aus der Beschreibung im Übrigen und aus den Ansprüchen. Vorteilhafte Ausführungsbeispiele werden nachfolgend anhand von Zeichnungen näher erläutert. Es zeigen:
- Fig. 1: eine stark vereinfachte Darstellung eines elektronischen Bremssystems in einem Anhängefahrzeug mit zwei Achsen,
- Fig. 2: eine weiter vereinfachte Darstellung des Anhängefahrzeugs gemäß Fig. 1 mit Zugfahrzeug und Störung an einer Anhängerschnittstelle.

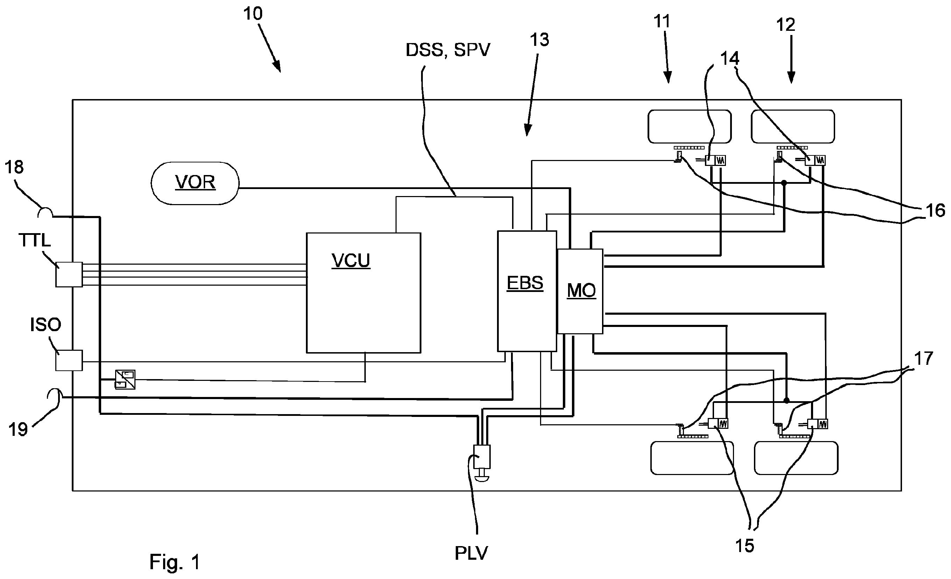

Ein in Fig. 1 gezeigtes Anhängefahrzeug 10 mit zwei Achsen 11, 12 weist ein elektronisches Bremssystem 13 auf. Dieses beinhaltet eine erste elektronische Steuerung EBS mit Modulator MO und eine zweite elektronische Steuerung VCU. Der Modulator MO bezieht Druckluft aus einem Vorrat VOR und steuert Bremsdruck aus an Betriebsbremsen 14, 15. Zur Regelung der Betriebsbremsen 14, 15 erhält die erste elektronische Steuerung EBS außerdem Daten von Raddrehzahlsensoren 16, 17. In nicht näher dargestellter Weise ist der Vorrat VOR mit einem Kupplungskopf 18 verbunden, welcher üblicherweise der rote Kupplungskopf ist.

Die erste elektronische Steuerung EBS ist mit einer ersten Anhängerschnittstelle ISO verbunden, über welche unter anderem eine Versorgungsspannung und ein elektronisches Bremssignal zur ersten elektronischen Steuerung EBS übertragen werden. Das elektronische Bremssignal wird hier über einen CAN-Bus übertragen, wie in der Norm ISO 7638 (aus 2018) vorgesehen.

Zusätzlich ist die erste elektronische Steuerung EBS mit einem pneumatischen, üblicherweise gelben Kupplungskopf 19 verbunden, über den ein pneumatischer Bremsdruck zum Anhängefahrzeug 10 übermittelt wird. Erste elektronische Steuerung EBS und Modulator MO bilden zusammen vorzugsweise eine Modulatoreinrichtung. Der gelbe Kupplungskopf 19 kann auch direkt mit dem Modulator MO verbunden sein.

Das Anhängefahrzeug 10 weist in bekannter Weise ein Parklöseventil PLV auf, welches pneumatisch mit dem Modulator MO und mit dem Kupplungskopf 18 verbunden ist.

Die zweite elektronische Steuerung VCU ist mit einer zweiten Anhängerschnittstelle TTL verbunden, welche hier eine Hochgeschwindigkeits-Datenschnittstelle ist, insbesondere eine 1000Base-T1-Schnittstelle, vorzugsweise gemäß der neuen ISO 23870. Über diese Schnittstelle werden insbesondere zum autonomen Fahren benötigte Daten und/oder Sensordaten vom Anhängefahrzeug 10 zum Zugfahrzeug 20 übertragen.

In die zweite Anhängerschnittstelle TTL eingebettet ist der bereits erwähnte CAN-Bus, ebenso eine Spannungsversorgung, beides ausgehend vom Zugfahrzeug 20, ebenso wie bei der ersten Anhängerschnittstelle ISO. Über die zweite Anhängerschnittstelle TTL stehen in der zweiten elektronischen Steuerung VCU eine Spannungsversorgung und das elektronische Bremssignal zur Verfügung, genauso wie in der ersten elektronischen Steuerung EBS. Die zweite Anhängerschnittstelle TTL beinhaltet vorzugsweise mindestens zwei Leiter zur Spannungsversorgung und zwei Leiter zur Datenübertragung.

Die beiden elektronischen Steuerungen EBS und VCU sind über eine Datenschnittstelle DSS und eine Leitung SPV zur Spannungsversorgung miteinander verbunden. Bei der Datenschnittstelle DSS handelt es sich vorzugsweise um einen CAN-BUS. Dadurch können beide elektronische Steuerungen EBS und VCU Daten und Versorgungsspannung von der jeweils anderen elektronischen Steuerung EBS und VCU erhalten.

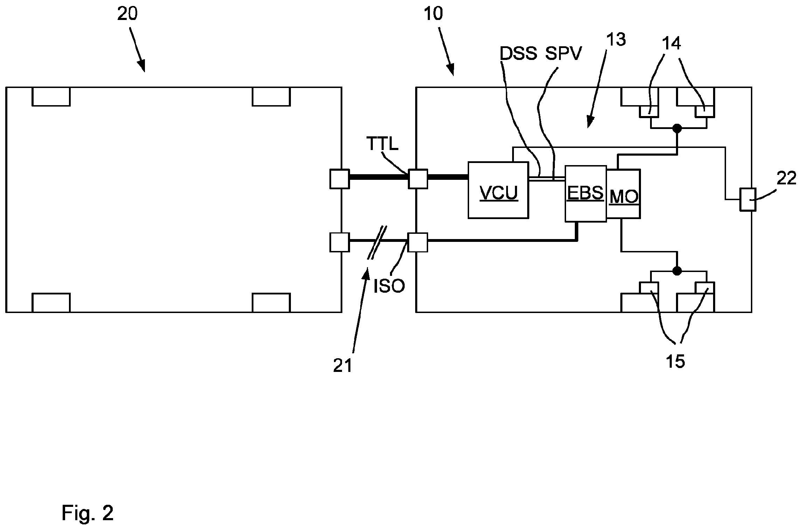

Fig. 2 zeigt das elektronische Bremssystem 13 im Anhängefahrzeug 10 gegenüber Fig. 1 weiter vereinfacht und zusätzlich das Zugfahrzeug 20. Dargestellt ist ein mechanischer Abriss 21 im Bereich der ersten Anhängerschnittstelle ISO. Die erste elektronische Steuerung EBS erkennt den Abriss 21 durch das Ausbleiben von Daten auf dem CAN-Bus und/oder die fehlende Versorgungsspannung über die Schnittstelle ISO und nutzt nun die auf der Datenschnittstelle DSS eingehenden Daten und die auf der Leitung SPV zur Verfügung stehende Versorgungsspannung. Das Anhängefahrzeug 10 kann trotz des Abriss 21 weiterhin gebremst werden und muss keine Notbremsung einleiten.

Als Beispiel für einen Sensor ist in Fig. 2 mit der zweiten elektronischen Steuerung VCU eine rückwärtsgerichtete Kamera 22 verbunden. Zusätzlich können weitere Sensoren und/oder Kameras angeschlossen sein. Deren Daten bzw. die Daten der Kamera 22 werden über die zweite Anhängerschnittstelle TTL zum Zugfahrzeug 20 übermittelt und dort in einem nicht dargestellten Steuergerät verarbeitet und/oder auf einem Monitor für den Fahrer angezeigt.

Bei einer Störung der zweiten Anhängerschnittstelle TTL, etwa bei einem mechanischen Abriss derselben (nicht gezeigt), erhält die zweite elektronische Steuerung VCU die Versorgungsspannung über die Leitung SPV von der ersten elektronischen Steuerung EBS. Außerdem kann die zweite elektronische Steuerung VCU reduzierte Daten über die Datenschnittstelle DSS zur ersten elektronischen Steuerung EBS übermitteln. Von dort gelangen die Daten über die erste Anhängerschnittstelle ISO zum Zugfahrzeug. Bei den reduzierten Daten kann es sich beispielsweise um Abstandsinformationen von Radarsensoren handeln, soweit diese für eine Weiterfahrt und/oder ein geregeltes Bremsmanöver ohne Einleitung einer Notbremsung benötigt werden.

### Bezugszeichenliste

- 10: Anhängefahrzeug
- 11: Achse
- 12: Achse
- 13: elektronisches Bremssystem
- 14: Betriebsbremsen
- 15: Betriebsbremsen
- 16: Raddrehzahlsensoren
- 17: Raddrehzahlsensoren
- 18: Kupplungskopf rot
- 19: Kupplungskopf gelb
- 20: Zugfahrzeug
- 21: Abriss
- 22: Kamera
- DSS: Datenschnittstelle
- EBS: erste elektronische Steuerung
- ISO: erste Anhängerschnittstelle
- MO: Modulator
- PLV: Parklöseventil
- SPV: Leitung zur Spannungsversorgung
- TTL: zweite Anhängerschnittstelle
- VCU: zweite elektronische Steuerung
- VOR: Vorrat

## Patentansprüche

1. Elektronisches Bremssystem (13) für ein Anhängefahrzeug (10), mit
- einer ersten elektronischen Steuerung (EBS) für eine Steuerung von Betriebsbremsen (14,15) und
- einer zweiten elektronischen Steuerung (VCU) für eine Übertragung von Daten aus dem Anhängefahrzeug (10) zum Zugfahrzeug (20),
wobei
- die erste elektronische Steuerung (EBS) mit der zweiten elektronischen Steuerung (VCU) wenigstens über eine Datenschnittstelle (DSS) oder eine elektrische Leitung (SPV) zur Spannungsversorgung verbunden ist,
**dadurch gekennzeichnet, dass**
- die erste elektronische Steuerung (EBS) mit einer ersten Anhängerschnittstelle (ISO) zur Übertragung von Daten und elektrischer Spannung vom Zugfahrzeug (20) zum Anhängefahrzeug (10) verbunden ist und
- die zweite elektronische Steuerung (VCU) mit einer zweiten Anhängerschnittstelle (TTL) zur Übertragung von Daten und elektrischer Spannung verbunden ist.

2. Bremssystem nach Anspruch 1, **dadurch gekennzeichnet, dass** die erste elektronische Steuerung (EBS) mit der zweiten elektronischen Steuerung (VCU) über die Datenschnittstelle (DSS) und die elektrische Leitung (SPV) zur Spannungsversorgung verbunden ist.

3. Bremssystem nach Anspruch 1 oder 2, **dadurch gekennzeichnet, dass** wenigstens Daten oder elektrische Spannung in einer Richtung von der ersten elektronischen Steuerung (EBS) zur zweiten elektronischen Steuerung (VCU) oder umgekehrt übertragbar sind.

4. Bremssystem nach Anspruch 1 oder 2, **dadurch gekennzeichnet, dass** Daten und elektrische Spannung bidirektional zwischen erster elektronischer Steuerung (EBS) und zweiter elektronischer Steuerung (VCU) übertragbar sind.

5. Bremssystem nach einem der Ansprüche 1-4, **dadurch gekennzeichnet, dass** die zweite Anhängerschnittstelle (TTL) eine 1000Base-T1-Schnittstelle ist.

6. Verfahren zur Steuerung eines elektronischen Bremssystems (13) nach einem der Ansprüche 1-5, mit wenigstens einem der folgenden Merkmale:
a) bei Ausfall oder Störung von elektrischen Bremssignalen auf der ersten Anhängerschnittstelle (ISO) verarbeitet die erste elektronische Steuerung (EBS) elektronische Bremssignale, welche über die Datenschnittstelle (DSS) und die zweite elektronische Steuerung (VCU) zur ersten elektronischen Steuerung (EBS) übermittelt werden,
b) bei Ausfall oder Störung der elektrischen Spannung auf der ersten Anhängerschnittstelle (ISO) nutzt die erste elektronische Steuerung (EBS) die elektrische Spannung, welche über die Datenschnittstelle (DSS) und die zweite elektronische Steuerung (VCU) für die erste elektronische Steuerung (EBS) zur Verfügung gestellt wird,
c) bei Ausfall oder Störung der elektrischen Bremssignale auf der ersten Anhängerschnittstelle (ISO) erhält die zweite elektronische Steuerung (VCU) Daten von der ersten elektronischen Steuerung (EBS) und überträgt die Daten zur zweiten Anhängerschnittstelle (TTL),
d) bei Ausfall oder Störung der Übertragung von Daten über die zweite Anhängerschnittstelle (TTL) erhält die erste elektronische Steuerung (EBS) Daten von der zweiten elektronischen Steuerung (VCU) und überträgt die Daten zur ersten Anhängerschnittstelle (ISO).

7. Anhängefahrzeug (10) mit einem elektronischen Bremssystem (13) nach einem der Ansprüche 1-5.

## Claims

1. Electronic brake system (13) for a trailer vehicle (10), comprising
- a first electronic controller (EBS) for controlling service brakes (14,15) and
- a second electronic controller (VCU) for transferring data from the trailer vehicle (10) to the towing vehicle (20),
wherein
- the first electronic controller (EBS) is connected to the second electronic controller (VCU) at least via a data interface (DSS) or an electrical line (SPV) for supplying voltage,
**characterized in that**
- the first electronic controller (EBS) is connected to a first trailer interface (ISO) for transferring data and electrical voltage from the towing vehicle (20) to the trailer vehicle (10), and
- the second electronic controller (VCU) is connected to a second trailer interface (TTL) for transferring data and electrical voltage.

2. Brake system according to claim 1, **characterized in that** the first electronic controller (EBS) is connected to the second electronic controller (VCU) via the data interface (DSS) and the electrical line (SPV) for supplying voltage.

3. Brake system according to claim 1 or 2, **characterized in that** at least data or electrical voltage can be transferred in a direction from the first electronic controller (EBS) to the second electronic controller (VCU) or vice versa.

4. Brake system according to claim 1 or 2, **characterized in that** data and electrical voltage can be transferred bidirectionally between the first electronic controller (EBS) and the second electronic controller (VCU).

5. Brake system according to any of claims 1 to 4, **characterized in that** the second trailer interface (TTL) is a 1000Base-T1 interface.

6. Method for controlling an electronic brake system (13) according to any of claims 1 to 5, comprising at least one of the following features:
a) in the event of loss or disruption of electrical brake signals at the first trailer interface (ISO), the first electronic controller (EBS) processes electronic brake signals which are transmitted to the first electronic controller (EBS) via the data interface (DSS) and the second electronic controller (VCU),
b) in the event of loss or disruption of the electrical voltage at the first trailer interface (ISO), the first electronic controller (EBS) uses the electrical voltage which is provided to the first electronic controller (EBS) via the data interface (DSS) and the second electronic controller (VCU),
c) in the event of loss or disruption of the electrical brake signals at the first trailer interface (ISO), the second electronic controller (VCU) receives data from the first electronic controller (EBS) and transfers the data to the second trailer interface (TTL),
d) in the event of loss or disruption of the transfer of data via the second trailer interface (TTL), the first electronic controller (EBS) receives data from the second electronic controller (VCU) and transfers the data to the first trailer interface (ISO).

7. Trailer vehicle (10) comprising an electronic brake system (13) according to any of claims 1 to 5.

## Revendications

1. Système de freinage électronique (13) pour un véhicule remorqué (10), comportant
- un premier dispositif de commande électronique (EBS) pour la commande de freins de service (14, 15) et
- un second dispositif de commande électronique (VCU) pour la transmission de données du véhicule remorqué (10) au véhicule tracteur (20),
dans lequel
- le premier dispositif de commande électronique (EBS) est connecté au second dispositif de commande électronique (VCU) au moins par l'intermédiaire d'une interface de données (DSS) ou d'un câble électrique (SPV) pour l'alimentation en tension,
**caractérisé en ce que**
- le premier dispositif de commande électronique (EBS) est connecté à une première interface de remorque (ISO) pour la transmission de données et de tension électrique du véhicule tracteur (20) au véhicule remorqué (10), et
- le second dispositif de commande électronique (VCU) est connecté à une seconde interface de remorque (TTL) pour la transmission de données et de tension électrique.

2. Système de freinage selon la revendication 1, **caractérisé en ce que** le premier dispositif de commande électronique (EBS) est connecté au second dispositif de commande électronique (VCU) par l'intermédiaire de l'interface de données (DSS) et du câble électrique (SPV) pour l'alimentation en tension.

3. Système de freinage selon la revendication 1 ou 2,
**caractérisé en ce qu'**au moins des données ou une tension électrique peuvent être transmises dans un sens, du premier dispositif de commande électronique (EBS) au second dispositif de commande électronique (VCU), ou inversement.

4. Système de freinage selon la revendication 1 ou 2,
**caractérisé en ce que** des données et une tension électrique peuvent être transmises de manière bidirectionnelle entre le premier dispositif de commande électronique (EBS) et le second dispositif de commande électronique (VCU).

5. Système de freinage selon l'une des revendications 1 à 4,
**caractérisé en ce que** la seconde interface de remorque (TTL) est une interface 1000Base-T1.

6. Procédé permettant de commander un système de freinage électronique (13) selon l'une des revendications 1 à 5, comportant au moins l'une des caractéristiques suivantes :
a) en cas de défaillance ou de perturbation des signaux de freinage électriques au niveau de la première interface de remorque (ISO), le premier dispositif de commande électronique (EBS) traite les signaux de freinage électroniques qui sont transmis par l'intermédiaire de l'interface de données (DSS) et du second dispositif de commande électronique (VCU) au premier dispositif de commande électronique (EBS),
b) en cas de défaillance ou de perturbation de la tension électrique au niveau de la première interface de remorque (ISO), le premier dispositif de commande électronique (EBS) utilise la tension électrique mise à disposition par l'intermédiaire de l'interface de données (DSS) et du second dispositif de commande électronique (VCU) au premier dispositif de commande électronique (EBS),
c) en cas de défaillance ou de perturbation des signaux de freinage électriques au niveau de la première interface de remorque (ISO), le second dispositif de commande électronique (VCU) reçoit des données du premier dispositif de commande électronique (EBS) et transmet les données à la seconde interface de remorque (TTL),
d) en cas de défaillance ou de perturbation de la transmission de données par l'intermédiaire de la seconde interface de remorque (TTL), le premier dispositif de commande électronique (EBS) reçoit des données du second dispositif de commande électronique (VCU) et transmet les données à la première interface de remorque (ISO).

7. Véhicule remorqué (10) comportant un système de freinage électronique (13) selon l'une des revendications 1 à 5.
